# EUROPEAN PATENT SPECIFICATION

(11) **EP 3 486 753 B1**
(45) Date of publication and mention of the grant of the patent: **04.05.2022**
(21) Application number: 18206212.5
(22) Date of filing: 14.11.2018
(51) Int. Cl.: G06F 3/01, G06F 3/0481, G02B 27/01, G02B 27/00, G11B 27/031, H04N 13/344, H04N 13/117

(54) **METHOD FOR REALTIME 360 DEGREE VIDEO PERSPECTIVE VIEW PATH DETERMINATION**
VERFAHREN ZUR ECHTZEITBESTIMMUNG VON 360-GRAD-VIDEOPERSPEKTIVISCHEN ANSICHTSPFADEN IN ECHTZEIT
PROCÉDÉ DE DÉTERMINATION DE CHEMIN DE VISION EN PERSPECTIVE VIDÉO À 360° EN TEMPS RÉEL

(30) Priority: 21.11.2017 US 201715818955
(43) Date of publication of application: 22.05.2019
(73) Proprietor: Bellevue Investments GmbH & Co. KGaA, 10589 Berlin (DE)
(72) Inventor: Herberger, Tilman, 01219 Dresden (DE); Tost, Titus, 01219 Dresden (DE)

(56) References cited:
- GB-A- 2 527 306
- US-A1- 2013 288 753
- US-A1- 2016 313 973
- CUONG NGUYEN ET AL: "Vremiere", PROCEEDINGS OF THE 2017 CHI CONFERENCE ON HUMAN FACTORS IN COMPUTING SYSTEMS , CHI '17, ACM PRESS, NEW YORK, NEW YORK, USA, 2 May 2017 (2017-05-02), pages 5428-5438, XP058337745, DOI: 10.1145/3025453.3025675 ISBN: 978-1-4503-4655-9

## Description

### CROSS REFERENCE TO RELATED APPLICATIONS

This application claims the benefit of U.S. Provisional Patent Application serial number 62/426,064 filed on 11/23/2016.

### TECHNICAL FIELD

This disclosure relates generally to a method of editing video content and, in more particular, to a method of real time editing and determination of a viewing path for 360° video source material with utilization of a smart phone or VR-headset.

### BACKGROUND

This disclosure relates generally to a method of providing video editing functionality for use with 360° video source material. Access to 360° video material is becoming increasing common due to the more ready availability of compact 360° video cameras, i.e., cameras that can record video in a 360° arc about the camera. The newer user-oriented cameras are suitable for handheld filming, mounting on a drone, etc. When viewed via a proper viewing device such as, for example, a virtual reality headset, a 360° / virtual playback places the viewer inside of the video, inside a sphere displaying the 360° environment and makes it possible for the viewer to look around within a virtual environment which contributes to an immersive viewing experience.

Software for editing 2D video material is readily available and allows even the most inexperienced users to perform sophisticated edits on that sort of material. However, editing 360° video source material is a completely different prospect. For example, each second of 360° source material contains an immense amount of video for every second of the source material as compared with a conventional 2D video source. Further, such 360° video recordings cannot readily be displayed on a 2D computer monitor of the sort used by conventional video editing software. Thus, the ability to edit 360° video is substantially limited by conventional video editing hardware and software.

CUONG NGUYEN ET AL: "Vremiere", PROCEEDINGS OF THE 2017 CONFERENCE ON HUMAN FACTORS IN COMPUTING SYSTEMS, CHI' 17, ACM PRESS, NEW YORK, NEW YORK, USA, 2 May 2017 (2017-05-02), pages 5428-5438, XP058337745 describes an application that enables a user to directly edit spherical video. The disclosed system is built upon a timeline design and enhanced with custom widgets to enable editing of spherical video inside the headset. The custom widgets enable spherical visualization, trimming and alignment of cuts, placement of 2D images, annotation with bookmarks for review and adaptive vignetting. Therefore the disclosed system is directed to transfer the well known editing schemes connected with generic 2D video material to spherical video without particular focus to utilize the movement opportunities associated with viewing and handling spherical videos.

GB2527306A (COUCHE GUILLAUME [FR]) 23 December 2015 (2015-12-23) is directed to the creation and playback of interactive movies using eye gaze or head orientation information. This is achieved through visual attention tracking of the editor (film or sound) during the creation phase and visual attention tracking of the viewer during the playback. The instant system therefore provides a combination of editor and viewer activities. Sounds or images are set according to the gaze or head position of the editor on an image and depending on the gaze or head position of the viewer the sound or images are reproduced. This system therefore is not related with accelerating editing spherical video to therewith provide automatic output incorporating head movement and editing commands.

US2013/288753 A1 (JACOBSON JEFFREY J [US] ET AL) 31 October 2013 (2013-10-31) is related to a human/computing interface and more particularly to a headset computing display device that accepts voice commands and tracks head motions to provide command inputs to a software application executed on a host computing device.

US2016/313973 A1 (YAJIMA KENRO [JP]) 27 October 2016 (2016-10-27) discloses a HMD (Head Mounted Device) that executes sound output processing for causing the earphone to output sound corresponding to an image displayed by the image display section. The system is directed to achieve more conspicuous improvements of the visual effect and the audio effect by changing the audibility of the sound, wherein the relative position of the sound source of the output and of the head of the user is relevant.

Thus, what is needed is a method of editing 360° video that allows the user to easily view and manipulate the 360° source material, a method that provides an intuitive utilization of the devices available for handling 360° source material.

### SUMMARY OF THE INVENTION

The invention is set out in the appended set of claims.

### BRIEF DESCRIPTION OF THE DRAWINGS

These and further aspects of the invention are described in detail in the following examples and accompanying drawings.
Figure **1** is an illustration of the working environment of the instant invention.
Figure **2** is illustrating the workflow of one preferred embodiment of the instant invention.
Figure **3** illustrates the workflow of another preferred embodiment of the instant invention.
Figure **4** depicts the data streams between the participating devices of the instant invention.
Figure **5** illustrates the contents of the data set generated and utilized by the instant invention.

### DETAILED DESCRIPTION

There is shown in the drawings, and will herein be described hereinafter in detail, some specific embodiments of the instant invention.

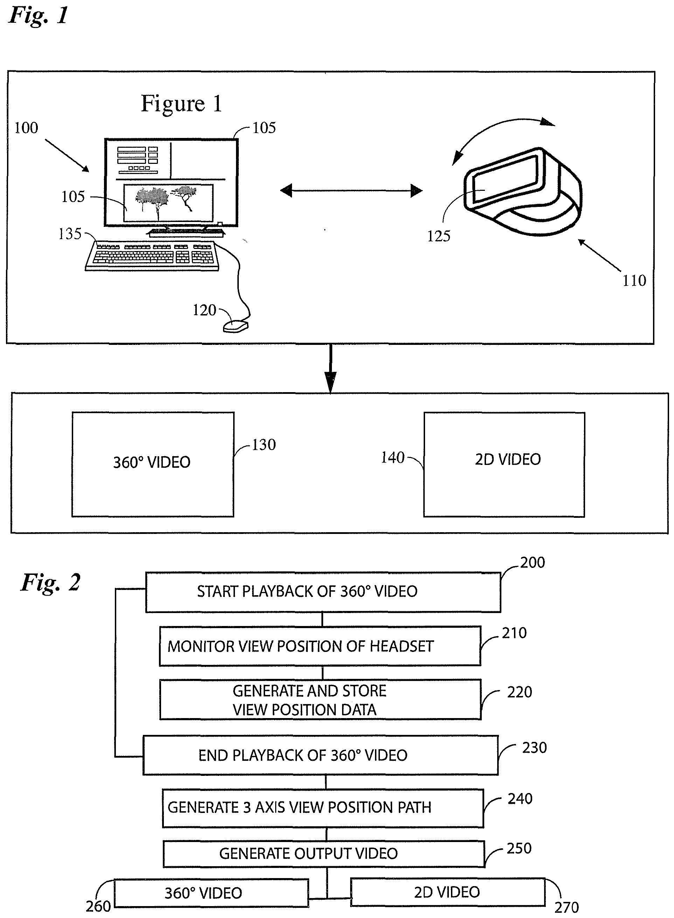

Turning first to the embodiment of Figure **1****,** a personal computer **100** (e.g., a desktop) is used. At least a portion of the instant invention will be implemented in the form of software running on that computer **100.** Such a computer will have some amount of program memory and hard disc storage (whether internal or accessible via a network) or other storage (e.g., SSD) as is conventionally utilized by such units. This embodiment of the work station of the instant invention consists of a personal computer **100** and a VR display headset **110** and an associated display device **125** which might be integral to the VR headset **110** or it could be a smart phone that is placed within a holder in the headset **110** provided for that purpose. Either way, the VR headset **110** will be connected to the computer **100** via a wire or wirelessly. According to this example, if a smart phone is used as the VR display device **125** it would typically be connected wirelessly to the computer **100.** Desktop video editing software of the sort described hereinafter is running on the computer **100** and is able to load video source material, e.g. a VR 360° video provided by a user. In this embodiment, a special VR viewer app will be running in the VR display device **110** and/or on the smart phone that is used as a display **125,** allowing the user to a view full 360° of the video work by using the headset and orienting the headset **110** in any desired direction as is conventionally done.

The application running within the VR viewer **110** of Figure 1 will be synchronized with software running on the computer **100,** i.e., the app will be in communication with video editing software running on the computer **100** on which editing is being performed. The app will also control or be synchronized with the display the 360° video source material in the video monitor section of the graphical user interface of the video editing software on the video monitor **105** personal computer **100.** In some cases, a section **105** of the graphical user interface of the video editing software running on the personal computer **100** will display the current portion of the 360° video that is currently being viewed by the user. By utilizing the VR viewer app, which functions as the priority device in terms of handling the 360° video source material, and the VR headset **110** the user will be able to initiate and control the editing of the 360° video source material in its entirety while wearing the headset and viewing the 360° video source material while editing.

During the time when the 360° video source material is being viewed and edited via the VR headset, which might be either connected wirelessly or wired to the personal computer, an embodiment will actively monitor and record the head movements of the viewer via head tracking. This is accomplished depending on the desired output video framerate preferably and for example for every frame one head tracking position is determined. The 360° video source material might consist of a continuous 360° recording of an event, however it might also consist of individual video sequences containing different 360° recordings. After the playback has ended or was stopped by the user, a data set that represents a 3 axis perspective view path is generated. This data set contains the stored orientation data of all three axis of the VR headset as generated by the head movements of the user during the active playback process. In some cases the three axis data set will be used to recover the six degree of freedom of the user's motion including forward/backward motion, side to side motion and rotation left to right motion.

The generated data set can than be used in use cases like object tracking, as a specific example. That is, the input material might contain 360° material recorded during a diving, or a skydiving session where it is desired to follow a specific object in the input material as it moves (e.g., an automobile as it drives pas the 360° video camera). Note that keeping the viewpoint of the video centered on this sort of moving object in a 360° video would be difficult to do using conventional video editing software.

In one embodiment the data set collected while the user was viewing the video can then be utilized to automatically generate a 360° video work containing the three axis perspective view path created by the user during the viewing. The edited 360° video work will typically contain some or all of the continuously played source material to follow the viewpoint of the user. However, additional material may be inserted (including static images) that stay on screen for some specified period of time. This might be particularly helpful when the input material consists of multiple individual sequences of different 360° video material and when the user is intentionally looking at different directions from the input 360° video material. Additionally, certain embodiments will also automatically generate a 2D output video work which is based on the perspective view path generated by the user.

Further, the computer **100** could have some number of peripheral devices attached physically or electronically to it, for example a keyboard **135** and a mouse **120** are commonly found on desktop computers. In some cases, the peripheral devices will be monitored for input from the user, with such input being combined with the motion data to provide a comprehensive data set that also contains the 3 axis perspective view path together with the input from the peripherals. The combined data set is then used to generate the output 360° video work **130** and/or the 2D output video work **140.** For example the user input via a mouse wheel could be interpreted by the monitoring software as a zoom in or a zoom out interaction with this command being implemented in the output video work at the time selected by the user.

Turning next to Figure **2****,** this figure illustrates a workflow associated with one embodiment. In a first step **200** the user will initiate the playback of the source 360° video while wearing a headset that is connected wirelessly or by wire to the personal computer. Note that the term "playback" as uses herein should be understood to include cases where the source video is displayed on the monitor **105** of the originating computer while it is being transmitted to and viewed within the VR headset **100.** It should also be understood that to be applicable to instances where the video source is transmitted, streamed, or otherwise delivered to the VR headset **110** without being simultaneously displayed on the computer monitor **105.** That being said, simultaneous display would generally be preferred.

The instant invention will, in a next step **210**, continuously monitor the view position / orientation of the headset which will generate a data set **220** that can be then stored during or after the playback of the 360° video work has ended **230.** The instant invention will then utilize the resulting orientation data set to generate a 3 axis view position path **240** for the selected 360° video work. This 3 axis view position path is then used to generate a desired output video **250,** which could be either a 360 ° video **260** or a 2D video **270** or both, depending on the user preferences.

Further, a number of different devices are able to record 360° video material and also generate metadata during the recording process, wherein some of this metadata is being used as a starting point for stabilizing the recorded 360° video material. The instant invention in another preferred embodiment might utilize this metadata in addition to the generated temporally straightened 3 axis orientation data set as starting point for the generation of the 360° output video that is also automatically stabilized.

Additionally, in another preferred embodiment, not covered by the claims, instead of passively viewing the 360° video work the user will be able to manually define his or her preferred focal viewing point within the 360° video and instruct the associated software invention to not respond to VR headset motion data. In some embodiments, this command might involve having the point-of-view move, e.g., between two defined focal viewing points. This command could be used to generate a transition between the two different viewing points within the therewith defined two consecutive sections of the source 360° video material. Such an embodiment would be particularly useful when the input material also consists of static images or of different 360° video recordings.

When generating the 360° output video, in some embodiments the instant invention will utilize the entire data set to produce an output 360° video that tracks the center of the field of view that the user chose while watching the 360° source video work. In case of generating a 2D output video, this embodiment only uses the position data from the 3 axis view position path that is necessary to generate such an output 2D video. In some embodiments, abrupt changes in the data set view point will be smoothed by incorporating transitions between, during, or before the changes. To determine which of the recorded view position changes are meaningful the instant invention uses in some embodiments a weighting system, wherein orientation changes that are above a specified percentage (e.g., an angular threshold) in relation to the time associated with the change are regarded as position changes that should be incorporated when producing the output video work. This will also tend to reduce the jitter that would otherwise likely be present in the output video.

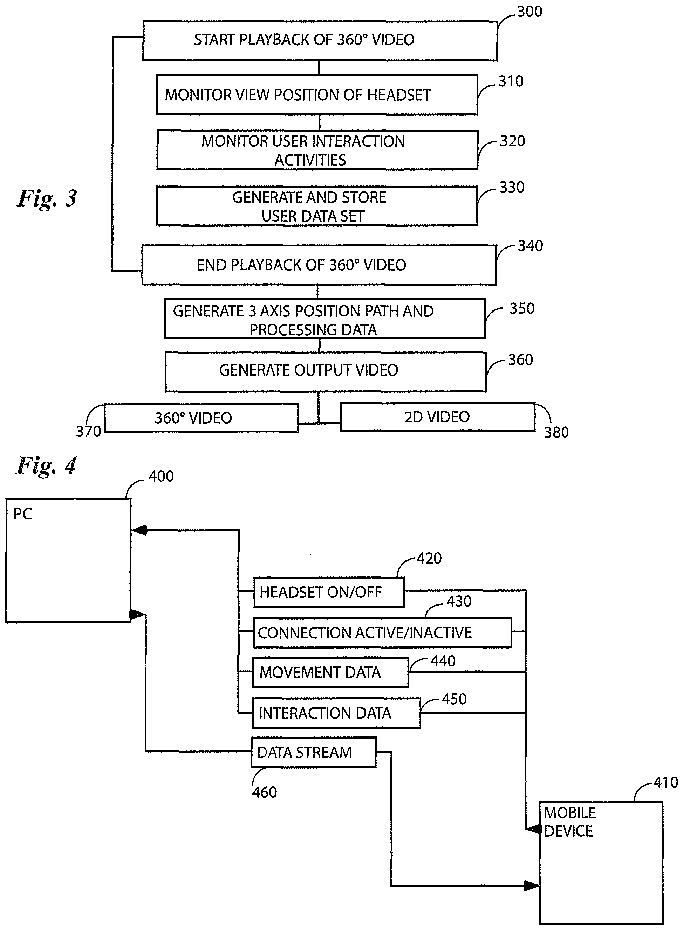

Turning now to Figure 3, this figure contains an operating logic suitable with some embodiments. In a first preferred step **300** the user will initiate the playback of the source 360° video work, wearing the headset, connected wirelessly or by wire to the personal computer. The instant invention will in a next preferred step **310** continuously monitor the view position of the headset. Additionally, in an embodiment not covered by the claims, interactions with the editing software (e.g. via keyboard or mouse) will also be monitored and captured. Those interaction commands, if any, will be combined with the viewpoint data **320** to generate a user data set **330** which can then be stored after the playback of the 360° video work is ended **340.** This embodiment then utilizes the data set to generate a 3 axis view position path and processing data **350** for the selected 360° video work. The generated data can then be used to generate an output video **360,** which is either a 360 ° video **370** or a 2D video **380** or both, depending on the user preferences.

In the case of embodiments that include the output of a 2D video, one approach to creating same would be to create a video that based on the user's field of view of the 360° work as that view changed over time. Another approach would be to select 2 of the 3 axis data values (e.g., the "X" and "Y" axes) from the recorded data set and use the information to form the output 2D video work. In some embodiments, the two coordinates will be used to create the 2D video by extracting a series of video frames from the 360° video that are centered on the selected coordinates.

When generating the 360° output video work the instant invention will typically use the entire data set of 3 axis orientation path and the interaction data to therewith produce an output video that resembles the point of view that the user chose while watching the 360° source video work, optionally with transitions, etc., of the sort that a user might issue in order to perform some basic edits of the output video. In case where the user chooses to generate a 2D output video, this embodiment only need to utilize the position data from the 3 axis view position path in order to extract the 2D video that represents the portion of the 360° video actually within the field of view of the user. As described previously, in interpreting the orientation data it might be necessary to smooth abrupt changes in the data set by filtering the motion series and/or incorporating transitions between at or before the changes - the data gathered by user peripheral interactions will preferably be fully integrated into the output video work, whether it is 2D or 360° video.

In another embodiment the data set of the 3 axis orientation path will not be utilized in a destructive manner by the instant invention. That is, the input 360° video work will not be edited; instead time values and the 3 axis orientation path will be transmitted along with the source 360° video to software that will handle the playback of the video. Then the motion data and the associated interactions will be applied to the source video as it is played for the user so that the user sees the video as intended by the editor. The replay software will utilize the corrected data during a playback of the source 360° video to produce the performance of an edited 360° edited video and/or a or edited 2D video work depending on the choice of the user without destructively editing the source.

It should be noted that "user interactions" **320** as that term is used herein can refer to manipulations of the peripheral devices connected to the personal computer. These sorts of interactions can be used to signal, for example, the location of cuts (or zooms, transition starts / ends, etc.) that are to be formed in the output work. The peripheral devices might also be used to start and stop the video, increase or decrease the volume, etc. However, an additional source of interaction data might be voice detection and recognition, where the user communicates his or her editing commands by voice commands.

Turning next to Figure **4****,** this figure contains some examples of the different data types and data stream connections between the participating devices of the instant invention that are be used. Generally, as described previously embodiments will be implemented on a personal computer **400** which will store and run the video editing software that is used to generate the output video work. In some embodiments, the VR headset that is worn will utilize a mobile computing device (e.g., a smart phone or other device with an accelerometer, gyroscope, inclinometer, etc.) to display the video to the user. That same device (or similar functionality built into the VR headset) will be used to sense the motion data **440** that is used during the editing process. In one embodiment the personal computer will store the 360° source video and stream it **460** on request to the headset's mobile device, which might be connected wirelessly or by wire to the personal computer.

Embodiments of the instant invention gather a plurality of different data values from the VR headset during the playback of the 360° source video. In one embodiment the instant invention will constantly monitor the status, including the orientation, of the headset **420** and also the connection status between the participating peripheral devices **430.** If the head set is being utilized as determined by utilizing head orientation tracking technologies, the connection status could also be determined by monitoring the quality of the transfer of the data stream. In addition to the status information the instant invention continuously monitors the movement data **440** and the interaction data **450** of the mobile device and the user.

For purposes of the instant disclosure, the term "movement data" **440** or "motion data" will be used to indicate measurements collected by the VR headset (or its attached mobile computing device) that reflect the movement of the VR headset during a user's viewing of the 360° source video, e.g., data such as the orientation, acceleration/deceleration, movement direction and/or rate, etc., might be collected.

The term "interaction data" **450** will be used to represent user commands - as distinct from movement data - that are issued during replay of the source video work. Note that some movement data could also serve as interaction data if such has been specifically defined by the tracking software. For example, a rapid head shake or nod could be a signal to start or stop the playback of the source video. More generally, interaction data will be used, for example, to define cut positions, zoom in, or zoom out, start or stop the playback of the video, set starting / ending positions of windows in the video work, etc.

In an alternative embodiment, the 360° source video work might be stored on the mobile device that serves as the video display for the VR headset. In this embodiment the instant invention could be implemented on the mobile device by monitoring the movement data **440** and interaction data **450** and storing the collected data set on the mobile device. This data set could then be transferred to a personal computer where the data set is applied to the 360° source video to generate the 360° output video work or the 2D output video work.

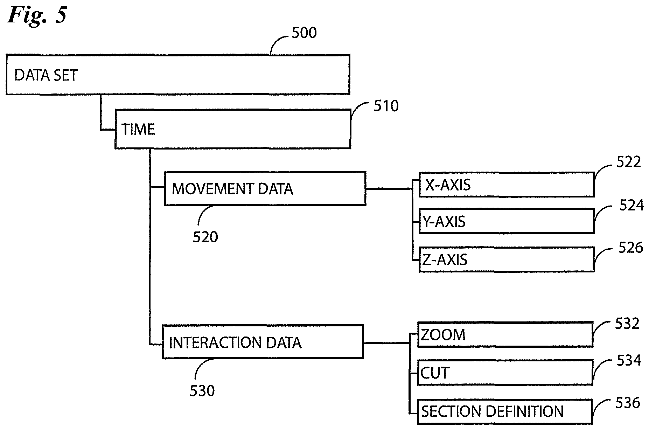

Now turning to Figure **5****,** this figure depicts the contents of one embodiment of the data set **500** generated and utilized by the instant invention. The time data **510** represents the run time of the 360° source video work and is used to correlate movement and interaction data with the position of the playback head. During the viewing process the instant invention will gather the movement data **520** of the user wearing the headset and viewing the video work and send it (or save it locally), along with the time of occurrence of each movement / interaction so that it can be correlated with the source video. As described previously, embodiments track (for every time increment) and store data for the different axis, x-axis **522,** y-axis **524** and z-axis **526** of the accelerometer and/or inclinometer, gyroscope, etc.. The applicability of the stored data stream is then later evaluated and screened in some embodiments depending on the intensity of changes in the movement data in relation to the time frame of these changes. Another data attribute that the instant invention also will monitor is the interaction data **530** through which, if available, interaction activities of the user are gathered. As described previously, the user will be able to use interaction devices either connected to the mobile device or the personal computer, for example mouse and keyboard, to issue editing commands.

Thus, the present invention is well adapted to carry out the objects and attain the ends and advantages mentioned above as well as those inherent therein.

## Claims

1. A method providing video editing functionality for use with 360 degrees source video in a system comprising a computer (100), a Virtual Reality VR headset (110) and a display device (125, 410), said computer (100) comprising a monitor (105), said method comprising the steps of:
(a) accessing a 360 degrees source video loaded by said computer (100) and provided by a user;
(b) establishing an electronic connection between said VR headset (110) and said display device (125, 410), said display device (125, 410) being either integral with the VR headset (110) or being placed within a holder in the VR headset (110);
(c) initiating, by said user, a playback of said 360 degrees_source video on said computer (100), wherein said playback includes using said electronic connection to transmit said 360 degrees source video to said VR headset (110);
(d) using said VR headset (110) to display on said display (125, 410) said playback of said 360 degrees_source video to a user wearing said VR headset (110);
(e) sensing, by said VR headset (110), and_recording, on said VR headset (110), a plurality of head movement data values of the user wearing the VR headset (110) while said initiated_playback of said 360 degrees source video is displayed on said display device (125,410), and storing a plurality of head movement data values (520) and a matching plurality of associated time values (510) by storing_each of said_recorded head_movement data values (520) with an associated time value (510);
(f) transmitting, by said VR headset (110) to said computer (100) said plurality of head movement data values (520) and said associated plurality of time values (510);
(g) after the playback of said 360 degrees source video on said computer has ended or was stopped by the user, generating, by said computer (100), an editing data set from said received plurality of head movement data values (520) and said associated time values (510), wherein said editing data set comprises three axis position path data values representing said received plurality of head movement data values (520) and said associated time values (510), said editing data set representing a three axis perspective viewpath;
(h) storing said generated editing data set on said computer (100);
(i) applying, by said computer (100), said editing data set to the 360 degrees source video to create an edited 360 degrees video work and an edited 2D video work, wherein creating the edited 2D video work comprises selecting two of the three axis data values of said editing data set and applying these two of the three axis data values to the 360 degrees source video;
(j) storing said edited 360 degrees video work and said edited 2D video work on said computer (100); and
(k) displaying at least a part of said edited 360 degrees video work or said edited 2D video work for the user on said computer.

2. The method according to Claim 1, wherein step (d) comprises the step of displaying said playback of said transmitted 360 degrees source video to said user wearing said VR headset (110) using a video display integral to said VR headset (110).

3. The method according to Claim 1, wherein step (d) comprises the step of displaying said playback of said transmitted 360 degrees source video to said user wearing said VR headset (110) using a video display removable attached to said VR headset (110).

4. The method according to Claim 3, wherein said video display removable attached to said VR headset (110) comprises a smart phone (410).

## Patentansprüche

1. Eine Methode zur Bereitstellung von Videobearbeitungsfunktionen zur Verwendung mit einem 360 Grad Quellvideo in einem System bestehend aus einem Computer (100), einem Virtual Reality VR Headset (110) und einem Darstellungsgerät (125,410), Computer umfasst einen Monitor (105), die Methode umfasst die folgenden Schritte:
(a) Zugriff auf ein 360 Grad Quellvideo geladen durch den Computer (100) und bereitgestellt durch einen Nutzer;
(b) Einrichten einer elektronischen Verbindung zwischen dem VR Headset (110) und dem Darstellungsgerät (125, 410), das Darstellungsgerät ist entweder integriert im VR Headset (110) oder in einer Halterung innerhalb des VR Headsets (110) platziert;
(c) Initialisieren, durch den Nutzer, die Wiedergabe des 360 Grad Quellvideos auf dem Computer (100), wobei die Wiedergabe die Verwendung der elektronischen Verbindung zur Übertragung des 360 Grad Quellvideos zum VR Headset (110) umfasst;
(d) Verwendung des VR Headset (110) zur Darstellung die Wiedergabe des 360 Grad Quellvideos auf dem Darstellungsgerät (125,410) zu einem Nutzer welcher das VR Headset (110) trägt;
(e) Aufnehmen, durch das VR Headset (110) und aufzeichnen auf dem VR Headset (110), eine Vielzahl von Kopfbewegungsdatenwerten des Nutzers, welcher das VR Headset (110) trägt, während die initialisierte Wiedergabe des 360 Grad Quellvideos ist auf dem Darstellungsgerät (125, 410) dargestellt und Speicherung einer Vielzahl von Kopfbewegungsdatenwerten (520) und einer übereinstimmenden Vielzahl von verknüpften Zeitwerten (510) durch Speicherung jeder der aufgezeichneten Kopfbewegungsdatenwerten (520) mit einem verknüpften Zeitwert (510);
(f) Übertragen, durch das VR Headset (110) zum Computer (100) die Vielzahl von Kopfbewegungsdatenwerten (520) und die verknüpfte Vielzahl von Zeitwerten (510);
(g) nachdem die Wiedergabe des 360 Grad Quellvideos auf dem Computer endete oder durch den Nutzer gestoppt wurde, erstellen, durch den Computer (100) ein Bearbeitungsdatensatz aus der empfangenen Vielzahl von Kopfbewegungsdatenwerten (520) und die verknüpften Zeitwerten (510), wobei der Bearbeitungsdatensatz Drei-Achsen-Positionsdatenwerte umfasst welche die empfangene Vielzahl von Kopfbewegungsdatenwerten (520) und deren verknüpfte Zeitwerte (510) umfasst, der Bearbeitungsdatensatz stellt einen Drei-Achsen-Perspektivensichtpfad dar;
(h) Speicherung des erstellten Bearbeitungsdatensatzes auf dem Computer (100);
(i) Verwendung, durch den Computer (100), des Bearbeitungsdatensatzes mit dem 360 Grad Quellvideo zur Erstellung eines editierten 360 Grad Videostück und eines editierten 2D Videostücks wobei die Erstellung des editierten 2D Video Stücks die Auswahl von zwei der drei Achsendatenwerte des Bearbeitungsdatensatzes und die Anwendung dieser zwei der drei Achsendatenwerte auf das 360 Grad Quellvideo umfasst;
(j) Speicherung des editierten 360 Grad Videostücks und des editierten 2D Videostück auf dem Computer (100);
(k) Darstellung von mindestens einem Teil des editierten 360 Grad Videostücks oder des editierten 2D Videostücks für den Nutzer auf dem Computer.

2. Die Methode gemäß Anspruch 1, wobei Schritt (d) den Schritt der Darstellung der Wiedergabe des übertragenen 360 Grad Quellvideos für den Nutzer welcher das VR Headset (110) trägt mit Verwendung eines fest eingebauten Videobildschirms innerhalb des VR Headsets (110) umfasst.

3. Die Methode gemäß Anspruch 1, wobei Schritt (d) den Schritt der Darstellung der Wiedergabe des übertragenen 360 Grad Quellvideos für den Nutzer welcher das VR Headset (110) trägt mit Verwendung eines entfernbaren Videobildschirms innerhalb des VR Headsets (110) umfasst.

4. Die Methode gemäß Anspruch 3, wobei der entfernbare Videobildschirm innerhalb des VR Headsets (110) ein Mobiltelefon (410) umfasst.

## Revendications

1. Une méthode qui fournit une fonctionnalité de montage vidéo destinée à être utilisée avec des vidéos source à 360 degrés dans un système englobant un ordinateur (100), un casque de réalité virtuelle (110) et un périphérique d'affichage (125, 410), l'ordinateur (100) comprenant un moniteur (105), et qui englobe les étapes suivantes :
(a) l'accès à une vidéo source à 360 degrés chargée par l'ordinateur (100) et fournie par un utilisateur
(b) l'établissement d'une connexion électronique entre le casque de réalité virtuelle (110) et le périphérique d'affichage (125, 410), ce dernier étant intégré au casque de réalité virtuelle (110) ou fixé avec un support à celui-ci
(c) le lancement par l'utilisateur de la lecture de la vidéo source à 360 degrés sur l'ordinateur (100), la lecture englobant l'utilisation de la connexion électronique pour transmettre la vidéo source à 360 degrés au casque de réalité virtuelle (110)
(d) l'utilisation du casque de réalité virtuelle (110) pour afficher sur l'écran (125, 410) la vidéo source à 360 degrés à un utilisateur portant le casque de réalité virtuelle (110)
(e) la détection par le casque de réalité virtuelle (110) et l'enregistrement sur le casque de réalité virtuelle (110) d'un grand nombre de valeurs de données de mouvement de la tête de l'utilisateur portant le casque de réalité virtuelle (110) pendant que la lecture lancée de la vidéo source à 360 degrés est affichée sur le périphérique d'affichage (125, 410), et le stockage d'un grand nombre de valeurs de données de mouvement de la tête (520) et d'un grand nombre correspondant de valeurs de temps associées (510) en stockant chacune des valeurs de données de mouvement de la tête enregistrées (520) avec une valeur de temps associée (510)
(f) (f) la transmission par le casque de réalité virtuelle (110) à l'ordinateur (100) du grand nombre de valeurs de données de mouvement de tête (520) et le grand nombre associé de valeurs de temps (510)
(g) après la fin de la lecture de la vidéo source à 360 degrés sur l'ordinateur ou son arrêt par l'utilisateur, la génération par l'ordinateur (100) d'un ensemble de données de montage à partir du grand nombre reçu de valeurs de données de mouvement de tête (520) et des valeurs de temps associées (510), l'ensemble de données de montage englobant des valeurs de données de position à trois axes représentant le grand nombre reçu de valeurs de données de mouvement de tête (520) et les valeurs de temps associées (510), l'ensemble de données de montage représentant un trajet de vue en perspective à trois axes
(h) le stockage de l'ensemble de données d'édition généré sur l'ordinateur (100)
(i) l'application par l'ordinateur (100) de l'ensemble de données de montage à la vidéo source de 360 degrés pour créer une œuvre vidéo à 360 degrés éditée et une œuvre vidéo en 2D éditée, la création de l'œuvre vidéo éditée de 2D englobant la sélection de deux des trois valeurs de données d'axe de l'ensemble de données de montage et l'application de ces deux des trois valeurs de données d'axe à la vidéo source à 360 degrés
(j) le stockage de l'œuvre vidéo à 360 degrés éditée et de l'œuvre vidéo en 2D éditée sur l'ordinateur (100)
(k) l'affichage d'au moins une partie de l'œuvre vidéo à 360 degrés éditée ou de l'œuvre vidéo en 2D éditée pour l'utilisateur sur l'ordinateur.

2. Une méthode qui équivaut à la revendication 1, l'étape (d) englobant l'affichage de la lecture de la vidéo source à 360 degrés transmise à l'utilisateur portant le casque de réalité virtuelle (110) en utilisant un affichage vidéo intégré au casque de réalité virtuelle (110)

3. Une méthode qui équivaut à la revendication 1, l'étape (d) englobant l'affichage de la lecture de la vidéo source à 360 degrés transmise à l'utilisateur portant le casque de réalité virtuelle (110) en utilisant un affichage vidéo amovible attaché au casque de réalité virtuelle (110)

4. Une méthode qui équivaut à la revendication 3, l'affichage vidéo amovible attaché au casque de réalité virtuelle (110) comprenant un smartphone (410).
